# EUROPEAN PATENT APPLICATION

(11) **EP 3 681 129 A1**
(43) Date of publication of application: **15.07.2020**
(21) Application number: 18854861.4
(22) Date of filing: 05.06.2018
(51) Int. Cl.: H04L 29/08, H04L 12/40

(54) **FPGA BASED DATA ACQUISITION CARD, DATA ACQUISITION SYSTEM AND DATA ACQUISITION METHOD**

(30) Priority: 05.09.2017 CN 201710792885
(71) Applicant: Baidu Online Network Technology (Beijing) Co., Ltd, Beijing 100085 (CN)
(72) Inventor: ZHANG, Yunfei, Beijing 100085 (CN); YU, Hao, Beijing 100085 (CN); YAN, Yongshan, Beijing 100085 (CN); ZHENG, Chao, Beijing 100085 (CN); TANG, Kun, Beijing 100085 (CN); JIANG, Yu, Beijing 100085 (CN)
(74) Representative: Maiwald Patent- und Rechtsanwaltsgesellschaft mbH
(86) International application number: PCT/CN2018/089950
(87) International publication number: WO 2019/047575

(57) **Abstract**

The present invention provides an FPGA based data acquisition card, data acquisition system and data acquisition method. The FPGA based data acquisition card comprises: a plurality of bus control modules and a plurality of sensor acquisition modules constructed on an FPGA on the basis of a soft core, the plurality of bus control modules being used to acquire bus data of each of a plurality of bus devices, the plurality of sensor acquisition modules being used to acquire sensor data on a plurality of sensors; and a controller on the FPGA, the controller being used to send the acquired bus data and sensor data to a processing device connected to the data acquisition card. The solution of the present invention realizes an integrated hardware solution for E2E data acquisition, and can improve the scalability of a system while securing the stability of the system.

## Description

### CROSS-REFERENCE TO RELATED APPLICATION

This application claims priority to Chinese Patent Application No. 201710792885.7 filed by Baidu Online Network Technology (Beijing) Co., Ltd. on September 5, 2017, titled "DATA ACQUISITION CARD BASED ON FIELD-PROGRAMMABLE GATE ARRAY, DATA ACQUISITION SYSTEM AND DATA ACQUISITION METHOD".

### FIELD

The present disclosure relates to a technical field of data acquisition, and more particularly, to a data acquisition card based on a field-programmable gate array, a data acquisition system and a data acquisition method.

### BACKGROUND

In the prior art, when there are a plurality of bus devices and a plurality of sensors in a data acquisition system, to acquire data on the plurality of bus devices and the plurality of sensors, a plurality of bus data acquisition cards and a plurality of sensor data acquisition cards are needed. For example, in a conventional available autonomous driving solution, in a case where a plurality of millimeter-wave radars and a plurality of cameras exist, a plurality of controller area network (CAN) acquisition cards and a plurality of video acquisition cards are required. One CAN acquisition card is used to acquire bus data on one CAN device, and one video acquisition card is used to acquire video data on one camera. Regarding the above technical solution in the prior art, the larger the number of bus devices and sensors is, the higher the hardware cost is required. For example, in a general embedded system, normally a large number of CAN bus signals are not required but the CAN acquisition cards are provided, which requires a high hardware cost and has a low expansibility. In addition, a conventional data acquisition system has a low flexibility. For example, the number of sensor acquisition cards needs to be increased or decreased manually when it is required to increase or decrease the number of sensors.

### SUMMARY

The present disclosure aims at proposing a data acquisition card based on a field-programmable gate array (FPGA), a data acquisition system and a data acquisition method.

A data acquisition card based on FPGA is provided according to an aspect of the present disclosure. The data acquisition card includes: a plurality of bus control modules and a plurality of sensor acquisition modules formed on the FPGA on the basis of a soft core, in which the plurality of bus control modules are configured to acquire bus data on a plurality of bus devices respectively, and the plurality of sensor acquisition modules are configured to acquire sensor data on a plurality of sensors respectively; and a controller on the FPGA, the controller being configured to send the bus data and the sensor data to a processing device coupled to the data acquisition card.

In an embodiment of the present disclosure, the data acquisition card is coupled to a global positioning system (GPS) receiver. The data acquisition card further includes: a GPS processing module, configured to receive GPS data information and a pulse per second (PPS) signal from the GPS receiver, obtain GPS position information and nanosecond-level GPS time information based on the GPS data information and the PPS signal, and provide the GPS position information and the nanosecond-level GPS time information to the plurality of bus control modules and the plurality of sensor acquisition modules; in which the plurality of bus control modules are configured to fuse the bus data with the GPS position information and the nanosecond-level GPS time information to obtain first fused data and to provide the first fused data to the controller; and the plurality of sensor acquisition modules are configured to fuse the sensor data with the GPS position information and the nanosecond-level GPS time information to obtain second fused data and to provide the second fused data to the controller.

A data acquisition system based on FPGA is provided according to another aspect of the present disclosure. The data acquisition system includes the data acquisition card based on FPGA according to the present disclosure, and a processing device, a plurality of bus devices and a plurality of sensors coupled to the data acquisition card.

In an embodiment of the present disclosure, the data acquisition card based on FPGA includes a GPS processing module. The data acquisition system further includes the GPS receiver coupled to the data acquisition card.

A data acquisition method based on FPGA is provided according to a further aspect of the present disclosure. The method includes: forming a plurality of bus control modules and a plurality of sensor acquisition modules on the FPGA on the basis of a soft core; acquiring by the plurality of bus control modules bus data on a plurality of bus devices respectively, and sending the bus data to a processing device through a controller on the FPGA; and acquiring by the plurality of sensor acquisition modules sensor data on a plurality of sensors respectively, and sending the sensor data to the processing device through the controller.

In an embodiment of the present disclosure, the method further includes: receiving GPS data information and a PPS signal from a GPS receiver, obtaining GPS position information and nanosecond-level GPS time information based on the GPS data information and the PPS signal, and providing the GPS position information and the nanosecond-level GPS time information to the plurality of bus control modules and the plurality of sensor acquisition modules. The operation of sending the bus data to the processing device through the controller on the FPGA further includes: fusing by the plurality of bus control modules the bus data with the GPS position information and the nanosecond-level GPS time information to obtain first fused data, and providing the first fused data to the controller. The operation of sending the sensor data to the processing device through the controller further includes: fusing by the plurality of sensor acquisition modules the sensor data with the GPS position information and the nanosecond-level GPS time information to obtain second fused data, and providing the second fused data to the controller.

Compared with the prior art, the present disclosure has the following advantages. By utilizing a programmability characteristic of the FPGA, the plurality of bus control modules and the plurality of sensor acquisition modules can be formed with a multiplexing function of the soft core to acquire the bus data on the plurality of bus devices and the sensor data on the plurality of sensors, thereby achieving an integrated hardware solution for data acquisition regarding end to end (E2E) and greatly saving hardware costs. Furthermore, the expansibility of the system may be improved and the coupling between modules may be lowered on the premise of guaranteeing the stability of the system. Consequently, it is easy to increase or decrease the number of the bus control modules and/or the number of the sensor acquisition modules to adapt changes in the number of the bus devices and the number of the sensors in the data acquisition system, without producing extra costs. In addition, the data acquisition card may connect the real-time GPS data information and the real-time PPS signal to the FPGA by coupling to the GPS receiver, thereby maintaining high-precision nanosecond-level GPS time information in the FPGA. Moreover, the acquired bus data and/or sensor data can be fused with the GPS position information and the nanosecond-level GPS time information, and the fused data is sent to the processing device through the controller, thereby ensuring an accurate time alignment of the entire data acquisition system, and providing data in a high level of accuracy for data processing in the later stage of the E2E solution.

### BRIEF DESCRIPTION OF THE DRAWINGS

Other features, objectives and advantages of the present disclosure will become more apparent from the detailed description of non-limiting embodiments with reference to the drawings.
Fig. 1 is a schematic diagram of a data acquisition card based on FPGA according to an embodiment of the present disclosure.
Fig. 2 is a schematic diagram of a GPS time module according to an example of the present disclosure.
Fig. 3 is a schematic diagram of a data acquisition system based on FPGA according to an embodiment of the present disclosure.
Fig. 4 is a flow chart of a data acquisition method based on FPGA according to an embodiment of the present disclosure.

Reference signs that are the same or similar in the drawings represent the same or similar components.

### DETAILED DESCRIPTION

In order to make the objectives, technical solutions and advantages of the present disclosure clearer, embodiments of the present disclosure will be described in detail as follows with reference to the drawings.

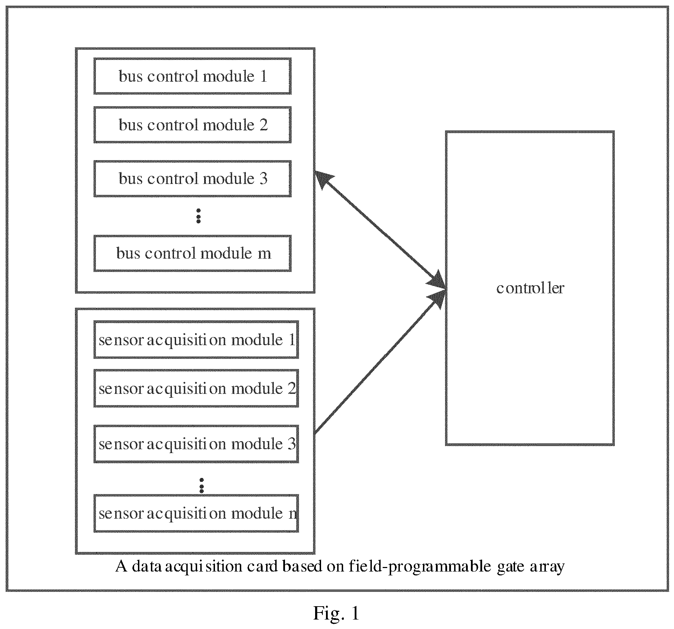

Fig. 1 is a schematic diagram of a data acquisition card based on FPGA according to an embodiment of the present disclosure. The data acquisition card based on FPGA includes m bus control modules and n sensor acquisition modules formed on the FPGA on the basis of a soft core, and a controller on the FPGA.

The m bus control modules are configured to acquire bus data on m bus devices respectively. The number of the bus control modules depends on the number of the bus devices coupled to the data acquisition card. One bus device corresponds to one bus control module. The bus device may realize an interconnection with the data acquisition card through any field bus. In an embodiment of the present disclosure, the bus devices may be CAN devices, The CAN device may realize an interconnection with the data acquisition card on the basis of a CAN bus. The m bus devices may use the same field bus or different field buses.

The n sensor acquisition modules are configured to acquire sensor data on the n sensors respectively. The number of the sensor acquisition modules depends on the number of the sensors coupled to the data acquisition card. One sensor corresponds to one sensor acquisition module. The n sensors may be of the same type or model or of different types or models. For example, the n sensors may be n cameras of the same model. For another example, n (n=5) sensors include 2 cameras, 1 speed sensor, 1 ultrasonic distance meter and 1 steering sensor.

It should be noted that in actual applications, the number of the bus control modules and the number of the sensor acquisition modules to be formed in the data acquisition card through a multiplexing function of a soft core of the FPGA are determined according to practical requirements (the number of the bus devices and the number of the sensors in the system). As a preferable solution, the data acquisition card may further include a monitoring unit formed on the FPGA on the basis of the soft core. The monitoring unit is configured to intelligently determine the number of the bus devices and the number of the sensors actually coupled to the data acquisition card currently by monitoring input end data on the FPGA (for example, the monitoring unit determines whether the data acquisition card is normally coupled to each sensor according to the input end data. If one of the sensors cannot be normally coupled to the data acquisition card, it is unnecessary to form a sensor acquisition module corresponding to the sensor, i.e., the number of the sensors that are normally coupled may be determined as the number of the sensor acquisition modules. For another example, the number of the sensors coupled to the data acquisition card currently may be obtained through the input end data), and adjust the number of the bus control modules and the number of the sensor acquisition modules in real time according to the determined number of the bus devices and the determined number of the sensors. The monitoring unit may perform operations before the bus control modules and the sensor acquisition modules are formed on the basis of the soft core, or perform operations periodically during operations of the data acquisition card.

The controller is configured to send the acquired bus data and sensor data to a processing device coupled to the data acquisition card. It should be noted that the controller may send the bus data and the sensor data to the processing device coupled to the data acquisition card separately, or, send fused data obtained from the bus data and the sensor data to the processing device. The operation of fusing the bus data and the sensor data may be performed by the controller, or by other units on the FPGA.

In an embodiment of the present disclosure, the controller is a peripheral component interconnect-express (PCIE) controller, which is coupled to the processing device on the basis of peripheral component interconnect-express. As an example, the PCIE controller in the data acquisition card is interconnected to an external processing device through PCIE x4, and thus a bandwidth of 12Gbps may be realized, thereby achieving acquisition of up to 20 channels of 200w RawRGB video data, or acquisition of 10,000 channels of bus data of 1M (megabytes) bandwidth.

As a preferable solution, the data acquisition card is coupled to the GPS receiver. The data acquisition card further includes: a GPS processing module.

The GPS processing module is configured to receive GPS data information and a pulse per second (PPS) signal from the GPS receiver, obtain GPS position information and nanosecond-level GPS time information based on the GPS data information and the PPS signal, and provide the GPS position information and the nanosecond-level GPS time information to the plurality of bus control modules and the plurality of sensor acquisition modules.

The plurality of bus control modules fuse the bus data with the GPS position information and the nanosecond-level GPS time information to obtain first fused data, and provide the first fused data to the controller. The plurality of sensor acquisition modules fuse the sensor data with the GPS position information and the nanosecond-level GPS time information to obtain second fused data, and provide the second fused data to the controller.

The GPS receiver sends the GPS data information to the GPS processing module through a serial port signal, and the GPS receiver sends a PPS signal per second. The GPS data information includes GPS position information and GPS time-relevant information. The GPS position information includes any information indicating a GPS position, for example, longitude, latitude, etc. The GPS time-relevant information includes any information related to GPS time, for example, GPS week and second information, coordinated universal time (UTC), etc.

The nanosecond-level GPS time information is used to indicate nanosecond-level time. For example, the nanosecond-level GPS time information may be a nanosecond-level time value (for example, 500^{th} nanosecond of 10^{th} second of 1,000^{th} week). For another example, the nanosecond-level GPS time information includes GPS week and second information (for example, 10^{th} second of 1,000^{th} week) and GPS nanosecond information (for example, 500^{th} nanosecond), so that a combination of the GPS week and second information and the GPS nanosecond information may represent nanosecond-level time.

As an example, each bus control module fuses the bus data acquired by the bus control module with the received GPS position information and nanosecond-level GPS time information, and provides the fused data to the controller, so as to send the fused data to the processing device through the controller. Each sensor acquisition module fuses the sensor data acquired by the sensor acquisition module with the received GPS position information and the nanosecond-level GPS time information, and provides the fused data to the controller, so as to send the fused data to the processing device through the controller.

It should be noted that in the above examples, fusion operations are performed by each bus control module or each sensor acquisition module. A person skilled in the art may understand that other modules may be formed on the FPGA for performing the above fusion operations.

In an embodiment of the present disclosure, the GPS processing module further includes: a GPS frame parsing module, a GPS position module and a GPS time module.

The GPS frame parsing module is configured to receive the GPS data information from the GPS receiver, obtain GPS position information and GPS week and second information through parsing the GPS data information, provide the GPS position information to the GPS position module, and provide the GPS week and second information to the GPS time module.

The GPS position module is configured to provide the received GPS position information to the plurality of bus control modules and the plurality of sensor acquisition modules.

The GPS time module is configured to receive the PPS signal from the GPS receiver, determine GPS nanosecond information according to the PPS signal and a 1Ghz clock signal from a phase locked loop (PLL), and obtain the nanosecond-level GPS time information according to the GPS nanosecond information and the received GPS week and second information.

The GPS frame parsing module is coupled to the GPS position module and the GPS time module respectively. Both the GPS position module and the GPS time module are coupled to the plurality of bus control modules and the plurality of sensor acquisition modules.

The GPS nanosecond information and the GPS week and second information may be together regarded as the nanosecond-level GPS time information. Or, a nanosecond-level time value is obtained according to the calculation of the GPS nanosecond information and the GPS week and second information, and the nanosecond-level time value is regarded as the nanosecond-level GPS time information.

As a preferable solution, the GPS time module further includes: a PPS processing module, a GPS week and second register and a GPS nanosecond register. The PPS processing module is configured to receive the PPS signal from the GPS receiver, determine the GPS nanosecond information according to the PPS signal and the 1Ghz clock signal from the PLL, and provide the determined GPS nanosecond information to the GPS nanosecond register in real time. The GPS week and second register is configured to receive and store the GPS week and second information from the GPS frame parsing module. The GPS nanosecond register is configured to receive and store the nanosecond information from the PPS processing module.

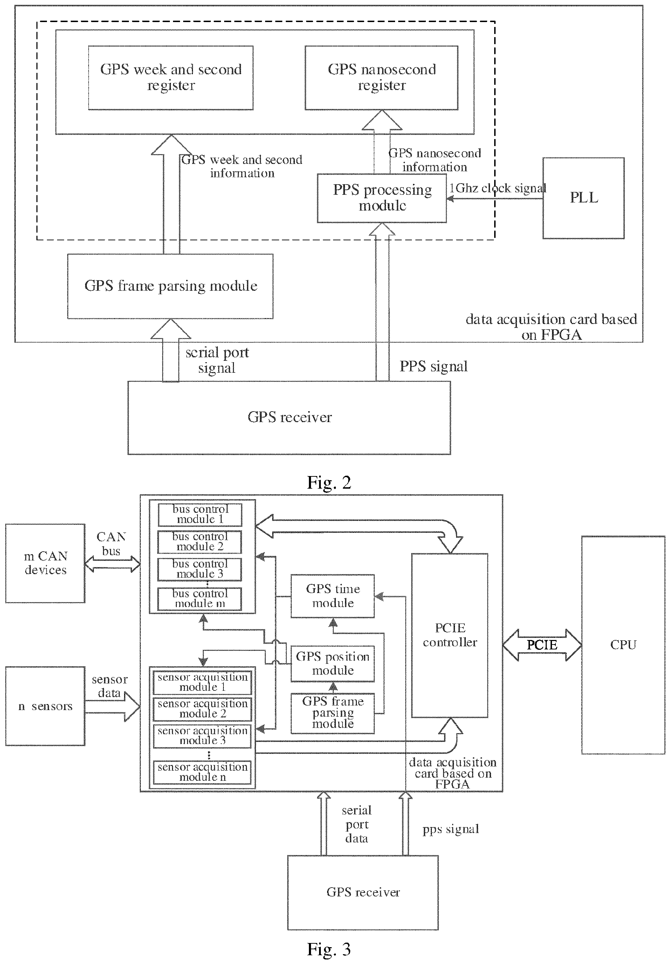

Fig. 2 is a schematic diagram of a GPS time module according to an example of the present disclosure. The dotted-line box represents the GPS time module, which includes the PPS processing module, the GPS week and second register and the GPS nanosecond register. The GPS receiver is coupled to the GPS frame parsing module through a serial port. The GPS frame parsing module is coupled to the GPS week and second register. Both PPS information emitted by the GPS receiver and the 1Ghz clock signal emitted by the PLL are transmitted to the PPS processing module. The PPS processing module is coupled to the GPS nanosecond register.

Specifically, the GPS receiver sends the GPS data information to the GPS frame parsing module through the serial port signal, and the GPS frame parsing module provides the GPS week and second information obtained from parsing the GPS data information to the GPS week and second register. The GPS receiver emits a PPS signal per second, and when the PPS processing module receives one PPS signal, currently-recorded GPS nanosecond information is cleared to zero. After that, every time the PPS processing module receives a clock (i.e., 1 nanosecond) from the PLL, 1 nanosecond is added to the current GPS nanosecond information, and meanwhile the latest GPS nanosecond information is provided to the GPS nanosecond register. When the PPS processing module receives a next PPS signal, the above operations are repeated, and thus accurate GPS nanosecond information may be provided.

As a preferable solution, the data acquisition card further includes a fusion module. The fusion module is configured to re-fuse the first fused data from the plurality of bus control modules with the second fused data from the plurality of sensor acquisition modules, and provide the re-fused data to the controller.

The data acquisition card based on FPGA according to this embodiment utilizes a programmability characteristic of FPGA, and acquires the bus data on the plurality of bus devices and the sensor data on the plurality of sensors by forming the plurality of bus control modules and the plurality of sensor acquisition modules with a multiplexing function of the soft core of the FPGA, thereby achieving an integrated hardware solution for data acquisition regarding E2E and greatly saving hardware costs. Furthermore, the expansibility of the system may be improved and the coupling between modules may be lowered on the premise of guaranteeing the stability of the system. Consequently, it is easy to increase or decrease the number of the bus control modules and/or the number of the sensor acquisition modules to adapt changes in the number of the bus devices and the number of the sensors in the data acquisition system, without producing extra costs. In addition, the data acquisition card may connect the real-time GPS data information and the real-time PPS signal to the FPGA by coupling to the GPS receiver, thereby maintaining high-precision nanosecond-level GPS time information in the FPGA. Moreover, the acquired bus data and/or sensor data can be fused with the GPS position information and the nanosecond-level GPS time information, and the fused data is sent to the processing device through the controller, thereby ensuring an accurate time alignment of the entire data acquisition system, and providing data in a high level of accuracy for data processing in the later stage of the E2E solution.

The present disclosure further provides a data acquisition system based on FPGA. The data acquisition system includes the data acquisition card based on FPGA, and a processing device, a plurality of bus devices and a plurality of sensors coupled to the data acquisition card. The data acquisition card includes the plurality of bus control modules and the plurality of sensor acquisition modules formed on the FPGA on the basis of the soft core, and the controller on the FPGA. The operations performed by various units in the data acquisition system have been described in detail in the foregoing embodiments, and are not described herein again.

The present disclosure further provides another data acquisition system based on FPGA. The data acquisition system includes the data acquisition card based on FPGA, and the GPS receiver, the processing device, the plurality of bus devices and the plurality of sensors coupled to the data acquisition card. The data acquisition card includes the plurality of bus control modules and the plurality of sensor acquisition modules formed on the FPGA on the basis of the soft core, the controller on the FPGA, and the foregoing GPS processing module. The operations performed by various units in the data acquisition system have been described in detail in the foregoing embodiments, and are not described herein again.

As an example, Fig. 3 is a schematic diagram of a data acquisition system based on FPGA according to an embodiment of the present disclosure. The data acquisition system includes the data acquisition card based on FPGA, m CAN devices, n sensors, the GPS receiver, a central processing unit (CPU) (the CPU herein is equivalent to the processing device) coupled to the data acquisition card. The data acquisition card includes: m bus control modules (bus control module 1, bus control module 2, ... , bus control module m) formed on the basis of the soft core, n sensor acquisition modules (sensor acquisition module 1, sensor acquisition module 2, ... , sensor acquisition module n) formed on the basis of the soft core, the PCIE controller and the GPS processing module. The GPS processing module further includes the GPS frame parsing module, the GPS position module and the GPS time module.

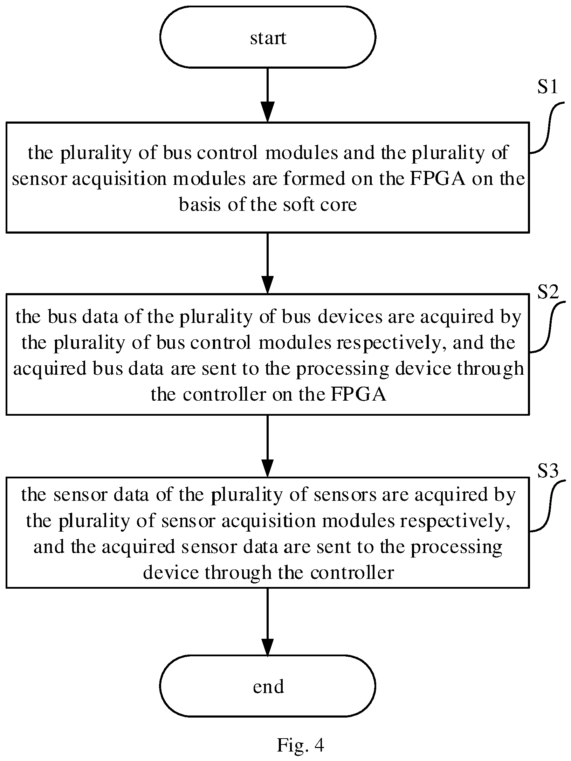

Fig. 4 is a flow chart of a data acquisition method based on FPGA according to an embodiment of the present disclosure. The method includes the followings.

At block S1, a plurality of bus control modules and a plurality of sensor acquisition modules are formed on the FPGA on the basis of a soft core.

The plurality of bus control modules are configured to acquire bus data on a plurality of bus devices respectively. The number of the bus control modules depends on the number of the bus devices coupled to the data acquisition card. One bus device corresponds to one bus control module. The bus device may realize an interconnection with the data acquisition card through any field bus. In an embodiment of the present disclosure, the bus devices are CAN devices, each may realize an interconnection with the data acquisition card on the basis of a CAN bus. The plurality of bus devices may use the same field bus or different field buses.

The plurality of sensor acquisition modules are configured to acquire sensor data on the plurality of sensors respectively. The number of the sensor acquisition modules depends on the number of the sensors coupled to the data acquisition card. One sensor corresponds to one sensor acquisition module. The plurality of sensors may be of the same type or model or of different types or models. For example, the n sensors are n cameras of the same model. For another example, n (n=5) sensors include 2 cameras, 1 speed sensor, 1 ultrasonic distance meter and 1 steering sensor.

It should be noted that in actual applications, the number of the bus control modules and the number of the sensor acquisition modules to be formed through a multiplexing function of a soft core of the FPGA are determined according to practical requirements (the number of the bus devices and the number of the sensors in the system). As a preferable solution, a monitoring unit may be formed on the FPGA on the basis of the soft core. The monitoring unit is configured to intelligently determine the number of the bus devices and the number of the sensors actually coupled to the FPGA currently through monitoring input end data on the FPGA (for example, the monitoring unit determines whether the data acquisition card is normally coupled to each sensor according to the input end data. If one of the sensors cannot be normally coupled to the data acquisition card, it is unnecessary to form a sensor acquisition module corresponding to the sensor, i.e., the number of the sensors that are normally coupled may be determined as the number of the sensor acquisition modules. For another example, the number of the sensors coupled to the FPGA currently may be obtained through the input end data), and adjust the number of the bus control modules and the number of the sensor acquisition modules in real time according to the determined number of the bus devices and the determined number of the sensors. The monitoring unit may perform operations before the block S1, or perform operations periodically after the block S1.

After the block S1 is performed, the following block S2 and block S3 are performed to realize data acquisition on the basis of FPGA.

At block S2, the plurality of bus control modules acquire the bus data on the plurality of bus devices respectively, and send the acquired bus data to the processing device through the controller on the FPGA.

In an embodiment of the present disclosure, the controller is the PCIE controller, which is coupled to the processing device on the basis of peripheral component interconnect-express. As an example, the PCIE controller in the data acquisition card is interconnected to the external processing device through PCIE x4, and thus a bandwidth of 12Gbps may be realized, thereby achieving acquisition of up to 20 channels of 200w RawRGB video data, or acquisition of 10,000 channels of bus data of 1M (megabytes) bandwidth.

At block S3, the plurality of sensor acquisition modules acquire the sensor data on the plurality of sensors respectively, and send the acquired sensor data to the processing device through the controller.

It should be noted that implementations of the block S2 and the block S3 do not follow a particular order.

It should be noted that the block S2 and the block S3 may be combined. For example, the plurality of bus control modules acquire the bus data on the plurality of bus devices respectively, and send the acquired bus data to the controller. The plurality of sensor acquisition modules acquire the sensor data on the plurality of sensors respectively, and send the acquired sensor data to the controller. The bus data and the sensor data are sent to the processing device through the controller separately, or, a fusion is performed on the bus data and the sensor data, and the fused data is sent to the processing device through the controller.

As a preferable solution, the method further includes block S4 (not shown).

At block S4, GPS data information and a PPS signal from the GPS receiver are received on the FPGA. GPS position information and nanosecond-level GPS time information are obtained according to the GPS data information and the PPS signal. The GPS position information and the nanosecond-level GPS time information are provided to the plurality of bus control modules and the plurality of sensor acquisition modules.

The operation of sending the acquired bus data to the processing device through the controller on the FPGA further includes: fusing by the plurality of bus control modules the bus data with the GPS position information and the nanosecond-level GPS time information to obtain first fused data, and providing the first fused data to the controller. The operation of sending the acquired sensor data to the processing device through the controller further includes: fusing by the plurality of sensor acquisition modules the sensor data with the GPS position information and the nanosecond-level GPS time information to obtain second fused data, and providing the second fused data to the controller.

The GPS receiver sends the GPS data information to the FPGA through the serial port signal, and the GPS receiver sends the PPS signal per second. The GPS data information includes GPS position information and GPS time-relevant information. The GPS position information includes any information indicating the GPS position, for example, longitude, latitude, etc. The GPS time-relevant information includes any information related to GPS time, for example, GPS week and second information, UTC, etc.

The nanosecond-level GPS time information is used to indicate nanosecond-level time. For example, the nanosecond-level GPS time information may be the nanosecond-level time value (for example, 500^{th} nanosecond of 10^{th} second of 1,000^{th} week). For another example, the nanosecond-level GPS time information includes GPS week and second information (for example, 10^{th} second of 1,000^{th} week) and GPS nanosecond information (for example, 500^{th} nanosecond), so that a combination of the GPS week and second information and the GPS nanosecond information may represent nanosecond-level time.

As an example, each bus control module fuses the bus data acquired by the bus control module with the received GPS position information and the nanosecond-level GPS time information, and provides the fused data to the controller, so as to send the fused data to the processing device through the controller. Each sensor acquisition module fuses the sensor data acquired by the sensor acquisition module with the received GPS position information and the nanosecond-level GPS time information, and provides the fused data to the controller, so as to send the fused data to the processing device through the controller.

It should be noted that in the above examples, fusion operations are performed by each bus control module or each sensor acquisition module. A person skilled in the art may understand that other modules may be formed on the FPGA for performing the above fusion operations.

As a preferable solution, the operation of receiving the GPS data information and the PPS signal from the GPS receiver, and obtaining the GPS position information and the nanosecond-level GPS time information according to the GPS data information and the PPS signal includes: receiving the GPS data information from the GPS receiver, and obtaining the GPS position information and the GPS week and second information through parsing the GPS data information; providing the GPS position information to the plurality of bus control modules and the plurality of sensor acquisition modules; and receiving the PPS signal from the GPS receiver, determining the GPS nanosecond information according to the PPS signal and the 1Ghz clock signal from the PLL, and obtaining the nanosecond-level GPS time information according to the GPS nanosecond information and the received GPS week and second information.

The GPS nanosecond information and the GPS week and second information may be together regarded as the nanosecond-level GPS time information. Or, a nanosecond-level time value is obtained according to the calculation of the GPS nanosecond information and the GPS week and second information, and the nanosecond-level time value is regarded as the nanosecond-level GPS time information.

In an embodiment of the present disclosure, the FPGA includes the GPS week and second register and the GPS nanosecond register. The GPS week and second register is configured to receive and store the GPS week and second information, and the GPS nanosecond register is configured to receive and store the nanosecond information. The GPS receiver sends the GPS data information to the FPGA through the serial port signal, and on the FPGA, the GPS week and second information obtained through parsing the GPS data information is provided to the GPS week and second register. The GPS receiver emits a PPS signal per second, and when the PPS signal is received, currently-recorded GPS nanosecond information is cleared to zero on the FPGA. After that, every time when a clock (i.e., 1 nanosecond) from the PLL is received, 1 nanosecond is added to the current GPS nanosecond information, and meanwhile the latest GPS nanosecond information is provided to the GPS nanosecond register. When a next PPS signal is received, the above operations are repeated, and thus accurate GPS nanosecond information may be provided.

As a preferable solution, the method further includes: re-fusing the first fused data from the plurality of bus control modules with the second fused data from the plurality of sensor acquisition modules, and sending the re-fused data to the processing device through the controller.

The method according to this embodiment may acquire the bus data on the plurality of bus devices and the sensor data on the plurality of sensors by the plurality of bus control modules and the plurality of sensor acquisition modules formed with a multiplexing function of the soft core of the FPGA, thereby achieving an integrated hardware solution for data acquisition regarding E2E and greatly saving hardware costs. Furthermore, the expansibility of the system may be improved and the coupling between modules may be lowered on the premise of guaranteeing the stability of the system. Consequently, it is easy to increase or decrease the number of the bus control modules and/or the number of the sensor acquisition modules to adapt changes in the number of the bus devices and the number of the sensors in the data acquisition system, without producing extra costs. In addition, the real-time GPS data information and the real-time PPS signal may be connected to the FPGA by coupling to the GPS receiver, thereby maintaining high-precision nanosecond-level GPS time information in the FPGA. Moreover, the acquired bus data and/or sensor data can be fused with the GPS position information and the nanosecond-level GPS time information, and the fused data is sent to the processing device through the controller, thereby ensuring an accurate time alignment of the entire data acquisition system, and providing data in a high level of accuracy for data processing in the later stage of the E2E solution.

It should be noted that the methods discussed herein (some of which are illustrated by the flowchart) are implemented by hardware, a hardware description language such as Verilog HDL, or a combination thereof.

It should be noted that the data acquisition card based on FPGA, the data acquisition system and the data acquisition method described herein are applicable to any application scenario for data acquisition of a plurality of sensors, for example, an autonomous driving solution based on E2E.

It is apparent to those skilled in the art that the present disclosure is not limited to the details of the above-described exemplary embodiments, and the present disclosure may be implemented in other specific forms without departing from the spirit or basic features of the present disclosure. Therefore, the above embodiments are to be considered as illustrative, rather than restrictive, from any perspective, and the scope of the present disclosure is defined by the attached claims instead of the above specification. Consequently, all changes falling in the meaning and scope of equivalent elements of the claims are included in the present disclosure. Any reference signs in the claims should not be construed as limiting relevant claims. In addition, it is obvious that the word "comprising" does not exclude other units or steps, and the singular does not exclude the plural. A plurality of units or devices described in the system claims may also be implemented by a unit or a device with software or hardware. Words such as the first, the second, etc. are used to denote titles and do not denote any particular order.

## Claims

1. A data acquisition card based on a field-programmable gate array (FPGA), comprising:
a plurality of bus control modules and a plurality of sensor acquisition modules formed on the FPGA on the basis of a soft core, wherein the plurality of bus control modules are configured to acquire bus data on a plurality of bus devices respectively, and the plurality of sensor acquisition modules are configured to acquire sensor data on a plurality of sensors respectively; and
a controller on the FPGA, the controller being configured to send the bus data and the sensor data to a processing device coupled to the data acquisition card.

2. The data acquisition card according to claim 1, wherein the data acquisition card is coupled to a global positioning system (GPS) receiver, and the data acquisition card further comprises:
a GPS processing module, configured to receive GPS data information and a pulse per second (PPS) signal from the GPS receiver, obtain GPS position information and nanosecond-level GPS time information based on the GPS data information and the PPS signal, and provide the GPS position information and the nanosecond-level GPS time information to the plurality of bus control modules and the plurality of sensor acquisition modules;
in which the plurality of bus control modules fuse the bus data with the GPS position information and the nanosecond-level GPS time information to obtain first fused data, and provide the first fused data to the controller; and the plurality of sensor acquisition modules fuse the sensor data with the GPS position information and the nanosecond-level GPS time information to obtain second fused data, and provide the second fused data to the controller.

3. The data acquisition card according to claim 2, wherein the GPS processing module further comprises: a GPS frame parsing module, a GPS position module and a GPS time module; wherein,
the GPS frame parsing module is configured to receive the GPS data information from the GPS receiver, obtain the GPS position information and GPS week and second information by parsing the GPS data information, provide the GPS position information to the GPS position module, and provide the GPS week and second information to the GPS time module;
the GPS position module is configured to provide the GPS position information to the plurality of bus control modules and the plurality of sensor acquisition modules; and
the GPS time module is configured to receive the PPS signal from the GPS receiver, determine GPS nanosecond information based on the PPS signal and a 1Ghz clock signal from a phase locked loop (PLL), and obtain the nanosecond-level GPS time information based on the GPS nanosecond information and the GPS week and second information.

4. The data acquisition card according to claim 3, wherein the GPS time module further comprises: a PPS processing module, a GPS nanosecond register and a GPS week and second register; wherein,
the PPS processing module is configured to receive the PPS signal from the GPS receiver, determine the GPS nanosecond information based on the PPS signal and the 1Ghz clock signal from the PLL, and provide the GPS nanosecond information to the GPS nanosecond register in real time;
the GPS week and second register is configured to receive and store the GPS week and second information from the GPS frame parsing module; and
the GPS nanosecond register is configured to receive and store the GPS nanosecond information from the PPS processing module.

5. The data acquisition card according to any one of claims 2 to 4, further comprising a fusion module, the fusion module being configured to re-fuse the first fused data from the plurality of bus control modules with the second fused data from the plurality of sensor acquisition modules, and provide re-fused data to the controller.

6. A data acquisition system based on FPGA, comprising the data acquisition card based on FPGA according to claim 1, and a processing device, a plurality of bus devices and a plurality of sensors coupled to the data acquisition card.

7. A data acquisition system based on FPGA, comprising the data acquisition card based on FPGA according to any one of claims 2 to 5, and a GPS receiver, a processing device, a plurality of bus devices and a plurality of sensors coupled to the data acquisition card.

8. A data acquisition method based on FPGA, comprising:
forming a plurality of bus control modules and a plurality of sensor acquisition modules on the FPGA on the basis of a soft core;
acquiring by the plurality of bus control modules bus data on a plurality of bus devices respectively, and sending the bus data to a processing device through a controller on the FPGA; and
acquiring by the plurality of sensor acquisition modules sensor data on a plurality of sensors respectively, and sending the sensor data to the processing device through the controller.

9. The method according to claim 8, further comprising:
receiving GPS data information and a PPS signal from a GPS receiver on the FPGA, obtaining GPS position information and nanosecond-level GPS time information based on the GPS data information and the PPS signal, and providing the GPS position information and the nanosecond-level GPS time information to the plurality of bus control modules and the plurality of sensor acquisition modules;
in which the operation of sending the bus data to a processing device through a controller on the FPGA further comprises:
fusing by the plurality of bus control modules the bus data with the GPS position information and the nanosecond-level GPS time information to obtain first fused data, and providing the first fused data to the controller; and
in which the operation of sending the sensor data to the processing device through the controller further comprises:
fusing by the plurality of sensor acquisition modules the sensor data with the GPS position information and the nanosecond-level GPS time information to obtain second fused data, and providing the second fused data to the controller.

10. The method according to claim 9, wherein the operation of receiving GPS data information and a PPS signal from a GPS receiver, and obtaining GPS position information and nanosecond-level GPS time information based on the GPS data information and the PPS signal comprises:
receiving the GPS data information from the GPS receiver, and obtaining the GPS position information and GPS week and second information through parsing the GPS data information;
providing the GPS position information to the plurality of bus control modules and the plurality of sensor acquisition modules; and
receiving the PPS signal from the GPS receiver, determining GPS nanosecond information based on the PPS signal and a 1Ghz clock signal from a PLL, and obtaining the nanosecond-level GPS time information based on the GPS nanosecond information and the GPS week and second information.

11. The method according to claim 9 or 10, further comprising:
re-fusing the first fused data from the plurality of bus control modules with the second fused data from the plurality of sensor acquisition modules on the FPGA, and sending re-fused data to the processing device through the controller.
